# EUROPÄISCHE PATENTSCHRIFT

(11) **EP 3 819 525 B1**
(45) Veröffentlichungstag und Bekanntmachung des Hinweises auf die Patenterteilung: **21.02.2024**
(21) Anmeldenummer: 20203268.6
(22) Anmeldetag: 22.10.2020
(51) Int. Cl.: B60G 13/08, F16F 9/32, F16J 15/3252, F16F 9/36, F16J 15/3232, F16J 15/322

(54) **ZYLINDERDICHTUNG**
CYLINDER SEAL
JOINT D'ÉTANCHÉITÉ DE CYLINDRE

(30) Priorität: 11.11.2019 DE 202019106256 U
(43) Veröffentlichungstag der Anmeldung: 12.05.2021
(73) Patentinhaber: KW Damping Technology, S.A.U., 48220 Abadino (ES)
(72) Erfinder: Friess, Gerhard, 48340 Amorebieta (ES); HUETE, Eduardo, 31550 Ribaforada (Navarra) (ES)
(74) Vertreter: ERNICKE Patent- und Rechtsanwälte PartmbB

(56) Entgegenhaltungen:
- DE-A1- 3 210 518
- DE-T2- 60 015 450
- DE-T2-602005 003 637
- DE-T5-112015 005 770
- DE-U1-202013 102 083

## Beschreibung

Die Erfindung betrifft eine Zylinderdichtung für einen fluidischen Doppelrohrzylinder und den damit ausgerüsteten Doppelrohrzylinder mit den Merkmalen in den Ansprüchen 1 und 13.

Eine Zylinderdichtung für einen Stoßdämpfer ist aus der DE 60 2005 003 637 T2 bekannt. Der Dichtring weist einen ringförmigen Gummikörper auf, der über einem eingebetteten scheibenförmigen Verstärkungseinsatz aus Kunststoff geformt wird. Der Verstärkungseinsatz umfasst einen scheibenförmigen radial außen liegenden Flansch und einen radial innen liegenden kegelstumpfförmigen, rohrartigen, flexiblen Ansatz, der zur "Ölseite" hin verlauft und sich vom Flansch weg verjüngt. Der ringförmige Gummikörper ist als Dichtlippe ausgebildet und weist am Innenumfang mehrere radiale Vorsprünge auf, die an der Kolbenstange anliegen. Ein Vorsprung ist an einer Ölschutzlippe ausgebildet, die den Ansatz des Verstärkungseinsatzes zumindest auf seiner radial innen liegenden Seite bedeckt. Dieser Vorsprung befindet sich auf Höhe des freien Ansatzendes. Der Dichtring ist direkt einem Öldruck im Zylinder ausgesetzt, welcher mit einer Radialkomponente auch auf die Ölschutzlippe wirkt und diese mit dem Vorsprung gegen die Kolbenstange drückt. Der flexible konischen Ansatz wirkt der besagten Radialkomponente des Öldrucks entgegen und entlastet die Ölschutzlippe.

Die DE 32 10 518 A1 offenbart einen Doppelrohrzylinder mit einem Verschlusspaket, welches eine Verschlussscheibe nebst Zentrierflansch und einer am Kolbenstangenumfang anliegenden Innendichtung umfasst. Die Innendichtung wird von einer separaten Schlauchfeder gegen die Kolbenstange gedrückt.

Die DE 600 15 450 T2 betrifft eine Zylinderdichtung mit einem abgewinkelten und metallischen Stützring sowie einem innenseitigen Dichtungselement, welches mit einem Schlitz versehen und ist und federnd ausweichfähig zwischen der Kolbenstange und dem Stützringflansch angeordnet ist.

Aus der DE 11 2015 005 770 T5 ist ein Doppelrohrzylinder mit einem scheibenförmigen Öldichtungselement bekannt, das einen scheibenförmigen Metallring und eine Ringplatte mit einem Dichtungselement umfasst, welches mit einer separaten ringförmige Rückhaltefeder an die Kolbenstange gespannt wird.

Die DE 20 2013 102 083 U1 befasst sich mit einer Kolbenstangenführung, die ein ringförmiges Führungselement mit Ölkanälen und einen Dichtring mit einer flachen Stützscheibe sowie einer ringförmigen Dichtlippe aufweist. Die Stützscheibe ist liegend auf dem Führungselement abgestützt, wobei die Dichtlippe in einer axialen Nut zwischen Kolbenstange und und dem Führungselement aufgenommen ist.

Die EP 2 418 394 A1 betrifft eine Zylinderdichtung, die eine am Zylinderende montierte Kolbenstangenführung mit einem Führungsring und einen Dichtring aufweist, der als Endanschlag für den Kolben dient und in einem topfartig vertiefen zentralen Sitz des Führungsrings aufgenommen und eingespannt ist. Der Dichtring umfasst einen abgewinkelten Stützring mit einem umgebenden Dichtmittel und einer innenseitigen Dichtlippe, die zwischen dem Sitz und der Kolbenstange eingespannt ist. Der Dichtring weist im Sitzbereich einen versteiften Gleitring zur Führung der Kolbenstange auf, der in einer Aussparung am Innenumfang der Dichtlippe angeordnet ist. Der Dichtring liegt rund um den zentralen Sitz großflächig und plan auf dem massiven Führungsring auf und hat einen zum Kolben weisenden ringartigen Vorsprung mit radialen Ausnehmungen zur Ölverdrängung bei Anschlag des Kolbens.

Die US 2006/0213734 A1 zeigt eine andere Zylinderdichtung mit einem Dichtring, der von einem ringscheibenartigen Stützring und einer nur an der inneren Scheibenringöffnung angeordneten Dichtlippe gebildet wird. Der Stützring ist an seinem äußeren Ringumfang zwischen einer Kolbenstangenführung, einem äußeren Zylinderrohr und einem Deckel angespannt.

Die EP 2 116 738 B1 zeigt einen ähnlichen Dichtring mit einem ringscheibenartigen Stützring und einem darauf angeordneten Stützmittel. Ein inneres dichtlippenartiges Dichtungselement liegt am Mantel der Kolbenstange an und wird an einem axial frei abstehenden Lippenabschnitt und dessen außenseitigen Vorsprung mittels einer Kolbenstangenführung gegen die Kolbenstange gepresst.

Die DE 38 31 719 A1 zeigt eine Zylinderdichtung mit einem ringartig profilierten Dichtungskörper, der innenseitig an der Kolbenstange anliegt und außenseitig an einer Kolbenstangenführung aufgenommen ist. Der Dichtungskörper weist eine an der Kolbenstange anliegende Dichtlippe auf, an der außenseitig ein schmaler Spannring aufgezogen ist. Am Spannring kann ein O-Ring oder ein Federring angeordnet sein.

Es ist Aufgabe der vorliegenden Erfindung, eine verbesserte Abdichtmöglichkeit für Zylinder aufzuzeigen.

Die Erfindung löst diese Aufgabe durch eine Zylinderdichtung mit den Merkmalen des Hauptanspruchs und durch einen mit einer solchen Zylinderdichtung ausgerüsteten Doppelrohrzylinder.

Die Zylinderdichtung und der damit ausgerüstete Doppelrohrzylinder haben verschiedene Vorteile.

Der Zylinder kann als fluidischer Zylinder, insbesondere Hydraulikzylinder ausgebildet sein. Er kann insbesondere als Stoßdämpfer für Schwerlastfahrzeuge eingesetzt werden. Die beanspruchte Zylinderdichtung und der damit ausgerüstete Zylinder, insbesondere Stoßdämpfer, halten unterschiedlichste und im Betrieb ggf. auch variierende Umgebungs- und Einsatzbedingungen aus. Dies betrifft z.B. extreme klimatische Umgebungseinflüsse und/oder hohe mechanische Belastungen. Sie haben einen sehr breiten thermischen Einsatzbereich von ca. -40°C bis ca. +180°C. Die Minustemperaturen können z.B. nachts in Polarzonen und im Stand eines Fahrzeugs einwirken. Die genannten hohen Temperaturen können im Zylinder bei einem Schwerlast-Fahrbetrieb und auf Off-Road-Strecken erreicht werden. Im Betrieb kann der gesamte Temperaturbereich durchfahren werden. Die beanspruchte Zylinderdichtung behält trotz dieser großen Temperaturschwankungen ihre Dichtwirkung. Für einen Schwerlastzylinder mit den dort herrschenden hohen Kräften und Drücken ist dies von besonderem Vorteil. Der Zylinder und die Zylinderdichtung sind für einen Einsatz unter solchen stark schwankenden Umgebungsbedingungen mit den besagten hohen Temperaturunterschieden geeignet und ausgebildet.

Die Zylinderdichtung kann die ein- und ausfahrbare Kolbenstange gegen einen Fluidaustritt sicher und nachhaltig abdichten. Sie kann außerdem eine Dichtwirkung für den Zylinderinnenraum und das stirnseitige Zylinderende ausüben. Die Zylinderdichtung wird innenseitig im Zylinder an dem bzgl. der Zylinder- oder Rohrachse stirnseitigen Zylinderende mit der dort austretenden Kolbenstange angeordnet. Das Fluid kann eine Hydraulikflüssigkeit, insbesondere Hydrauliköl, sein.

Die Zylinderdichtung umfasst zumindest einen Dichtring. Sie kann zusätzlich eine Kolbenstangenführung beinhalten. Dichtring und Kolbenstangenführung können getrennt oder gemeinsam lieferbare Produkte darstellen. Der Dichtring kann an einer vorhandenen Kolbenstangenführung nachgerüstet oder umgerüstet werden.

Der beanspruchte Dichtring weist einen Stützring und ein Dichtungsmittel auf, welches auf dem Stützring angeordnet ist. Das Dichtungsmittel kann den Stützring größtenteils bedecken. Der Dichtring besteht aus wenigen, insbesondere nur zwei, Komponenten. Er ist einfach und kostengünstig herstellbar.

Der Stützring hat eine abgewinkelte Querschnittsform mit einem scheibenartigen Ringabschnitt und einem rohrartigen Ringabschnitt, wobei der rohrartige Ringabschnitt an der inneren Ringöffnung des scheibenartigen Ringabschnitts angeordnet ist. Der abgewinkelte Stützring kann die Form eines Rohrflansches haben. Er kann z.B. als gelochtes und gebogenes Blechteil mit ggf. konstanter Wanddicke ausgebildet sein.

Der Stützring kann auf der Kolbenstange mit dem rohrartigen Ringabschnitt aufgesteckt und montiert sowie gehalten werden. Der abgewinkelte Stützring ist eigensteif und selbsttragend. Er kann ansonsten an seiner äußeren Umfangsseite am Zylinder und/oder an einer Kolbenstangenführung abgestützt und eingespannt sein, z.B. durch einen Deckel des Zylinders, insbesondere eine Randumbördelung eines Zylinderrohrs. An dieser Abstützstelle kann ebenfalls das Dichtungsmittel vorhanden und wirksam sein.

Der rohrartige Ringabschnitt erstreckt sich in Einbaustellung entlang der Kolbenstange. Die Erstreckung kann konzentrisch und parallel zur Kolbenstange bzw. zur Zylinderachse verlaufen. Alternativ kann der rohrartige Ringabschnitt eine konzentrische Konusform haben. Diese kann sich bevorzugt in Richtung zur Kolbenanordnung erweitern. Alternativ ist eine gegenläufige Erweiterung möglich.

Der rohrartige Ringabschnitt kann einen Ringkorpus aufweisen, der in Umfangsrichtung geschlossen oder segmentiert ist. Bei einer geschlossenen Ausbildung ergibt sich eine höhere Steifigkeit. Eine segmentierte Ausbildung ermöglicht eine quer zur Zylinder- oder Rohrachse, insbesondere in einer Radialrichtung, bestehende Federwirkung. Die Korpussegmente können in Richtung auf die Kolbenstange vorgebogen oder vorgespannt sein und können einzeln eine Federwirkung entfalten. Dies ist für das an der Kolbenstange angreifende Dichtungsmittel und die Dichtwirkung vorteilhaft. Insbesondere bei größeren Temperaturschwankungen ist eine solche segmentiert federende Dichtwirkung von großem Vorteil.

Die Innenkontur der Ringöffnung, insbesondere des rohrartigen Ringabschnitts, ist an die äußere Mantelkontur der Kolbenstange angepasst. Überlicherweise ist die Kolbenstange zylindrisch, wobei auch die Ringöffnung kreisrund ist bzw. der rohrartige Ringabschnitt an der Innenseite zylindrisch ausgebildet ist. Alternativ kann die Kolbenstange eine andere z.B. ovale oder prismatische Querschnittsform aufweisen mit entsprechender Formanpassung des rohrartigen Ringabschnitts bzw. der inneren Ringöffnung.

Der von der Ringöffnung nach außen erstreckte scheibenförmige Ringabschnitt ist dazu vorgesehen und ausgebildet, in Einbaustellung den Freiraum zwischen der zentralen Kolbenstange und dem Innenumfang des Zylinders zumindest weitestgehend abzudecken. Der scheibenförmige Ringabschnitt hat hierfür eine entsprechend große und z.B. radiale Erstreckung nach außen. Dies ermöglicht auch eine außenseitige axiale Abstützung und ggf. Einspannung des Stützrings an der Peripherie einer Kolbenstangenführung oder an der Peripherie des Zylinders.

Das Dichtungsmittel ist auf dem Stützring bevorzugt fest angeordnet. Es kann insbesondere aufvulkanisiert sein. Durch die innige Verbindung von Dichtungsmittel und Stützring ist der Dichtring einteilig und als einzelnes Komplettbauteil ausgebildet. Er kann dadurch besonders leicht und einfach gehandhabt und montiert werden.

Der Stützring besteht aus einem Metall, z.B. Stahl. Das Dichtungsmittel besteht aus einem geeigneten Dichtwerkstoff, z.B. einem Kunststoff, insbesondere einem kompressiblen und verformbaren Polymer. Der Stützring und das Dichtungsmittel sind für den besagten sehr breiten thermischen Einsatzbereich von ca. - 40°C bis ca. +180°C ausgelegt. Als Dichtwerkstoff sind hierfür fluorierte Elastomere, insbesondere Fluorkautschuke, z.B. Fluorkarbonkautschuk, vorteilhaft.

Das Dichtungsmittel weist zumindest ein innenseitiges und ringartiges Dichtungselement auf, das zur dichtenden Anlage am Mantel der Kolbenstange vorgesehen und ausgebildet ist. Das Dichtungsmittel kann ein oder mehrere weitere Dichtungselemente aufweisen, die bevorzugt miteinander verbunden sind. Alternativ können sie getrennt und stellenweise vorhanden sein.

Das Dichtungsmittel bedeckt vorzugsweise einen Großteil der Außenfläche des Stützrings. Das Dichtungsmittel kann den Stützring jeweils umfangseitig an der Ringöffnung und am Außenrand sowie an der zum Zylinderende weisenden Außenseite bedecken. Diese Bedeckung kann großteils, vorzugsweise durchgängig, vorhanden sein. Hierdurch hat der Dichtring zumindest an der zum Zylinderende weisenden Außenseite eine bevorzugt durchgängige Dichtwirkung.

Das innenseitige Dichtungselement ist als flexible Dichtlippe ausgebildet. Es ist an der Ringöffnung, nämlich an der Innenseite des rohrartigen Ringabschnitts, angeordnet. Es kann vom rohrartigen Ringabschnitt abgestützt sein, insbesondere an seiner Rückseite bzw. an seinem Außenumfang.

Die Abstützwirkung kann an dem zur Kolbenstange weisenden Außenumfang des Dichtungselements und ggf. zusätzlich in Axialrichtung vorhanden sein. Für eine Ausbildung als flexible Dichtlippe ist diese Abstützung am rohrartigen Ringabschnitt besonders vorteilhaft. Der Ringabschnitt kann mit seiner bevorzugt glattwandigen Ausbildung eine besonders gute und gleichmäßige Abstützwirkung für das anliegende Dichtungselement entfalten. Dies ist besonders bei großen Temperaturunterschieden von Vorteil.

Der rohrartige Ringabschnitt hält durch seine die Kolbenstange in Einbaustellung umschließende Rohrform das besagte Dichtungselement bzw. die Dichtlippe in der Abdichtstellung an der axial oszillierend beweglichen Kolbenstange. Die axiale Länge des rohrförmigen Ringabschnitts kann an die gewünschte Stützwirkung angepasst werden. Die erwähnte segmentierte Ausbildung des Ringkorpus ist in diesem Zusammenhang ebenfalls von großem Vorteil.

Das innenseitige Dichtungselement kann einen oder mehrere, insbesondere zwei, Lippenabschnitte aufweisen, die in Axialrichtung einseitig oder beidseitig über den Stützring, insbesondere den rohrartigen Ringabschnitt, hinausragen. Dieser jeweils elastisch verformbare Lippenabschnitt kann durch den axialen Überstand eine Federwirkung haben und kann ebenfalls vorteilhaft auf Temperaturschwankungen reagieren und die Dichtwirkung aufrecht erhalten. Der jeweilige Lippenabschnitt kann am axialen Überstand für eine dichtende Anlage am Mantel der Kolbenstange ausgebildet sein.

Das besagte innere Dichtungselement kann eine zur Kolbenstange konzentrische Ringform aufweisen. Im Querschnitt kann dabei eine von der Kolbenstange nach außen gewölbte Formgebung bestehen. Das innenseitige Dichtungselement weist mehrere radiale Vorsprünge auf, die für eine besonders gute und sichere Anlage und Dichtwirkung am Mantel der Kolbenstange sorgen. Ein oder mehrere Vorsprünge sind jeweils an einem oder beiden axial überstehenden Lippenabschnitten angeordnet. Der oder die Vorsprünge sind vom benachbarten Endbereich des Stützrings in Axialrichtung beabstandet. Der über das freie Ende des rohrartigen Ringabschnitts axial hinausragende Lippenabschnitt kann mit einem ebenfalls vom freien Ende distanzierten Vorsprung besonders gut und nachhaltig im genannten Temperaturbereich dichtend an der Kolbenstange anliegen. Die besagte Federwirkung des axialen Überstands ist von besonderem Vorteil.

Der rohrartige Ringabschnitt kann am Außenumfang des innenseitigen Dichtungselements anliegen und eingebettet sein. Ein Ansatz kann den axialen freien Rand des rohrartigen Ringabschnitts bedecken. Der Ansatz kann an einem axial überstehenden Lippenabschnitt angeordnet sein, z.B. als radialer Vorsprung an dessen Außenseite oder Rückseite. Die Einbettung und Abdeckung kann besonders gut durch ein Aufvulkanisieren des Dichtungsmittels gebildet werden.

In der Einbausstellung des Dichtrings wird das innenseitige Dichtungselement zwischen der Kolbenstange und dem rohrartigen Ringabschnitt eingespannt. Der formsteife und im Innendurchmesser adaptierte Rohrabschnitt presst das eingespannte innenseitige Dichtungselement in definierter Weise und mit nachhaltiger Dichtwirkung über den besagten breiten Temperaturbereich an die Kolbenstange. Hierfür ist die selbsttragende Ausbildung des Dichtrings von Vorteil.

Die Anpresswirkung und die Anpresskräfte können ausschließlich aus dem rohrartigen Ringabschnitt und dessen Gestaltung entwickelt werden. Ein zusätzliches außenseitigen Andrücken des Dichtungselements durch eine Kolbenstangenführung wie bei der EP 2 116 738 B1 oder durch einen besonderen Spannring oder Federring wie bei der DE 38 31 719 A1, sind entbehrlich. Die vom rohrartigen Ringabschnitt entwickelte Führung und Anpressung des Dichtungselements ist besser und zuverlässiger, insbesondere bei stark schwankenden Temperaturen. Eine segmentierte Ausbildung des Rohrkörpers kann auch hier besondere Vorteile haben.

Das Dichtungsmittel kann ferner ein außenseitiges Dichtungselement aufweisen, das zur dichtenden Anlage am Zylinder oder an einem anderen Teil der Zylinderdichtung, insbesondere einer etwaigen Kolbenstangenführung, vorgesehen und ausgebildet ist. Günstig ist dabei eine ringartige Ausbildung des Dichtungselements. Dieses kann am umfangseitigen Außenrand des scheibenartigen Ringabschnitts angeordnet sein und dichtet diesen gegenüber der Umgebung ab. Eine Ausbildung des Dichtungselements als Dichtlippe ist ebenfalls von Vorteil. Bei der Montage kann durch die Lippenverformung eine besonders gute Dichtwirkung für den in sich steifen Stützring erreicht werden.

Das Dichtungsmittel kann ferner ein Dichtungselement aufweisen, das zwischen dem innenseitigen und dem außenseitigen Dichtungselement auf dem scheibenartigen Ringabschnitt angeordnet ist und eine bevorzugt zum stirnseitigen Zylinderende weisende Oberseite dieses scheibenartigen Ringabschnitts bedeckt. Das ebenfalls vorzugsweise ringartige Dichtungselement kann mit den äußeren und inneren, bevorzugt lippenartigen Dichtungselementen einstückig verbunden sein, insbesondere durch eine Vulkanisierung.

Die Zylinderdichtung kann die vorgenannte Kolbenstangenführung aufweisen. Diese besitzt einen Führungsring, der zur seitlichen bzw. radialen Führung der oszillierenden Kolbenstange dient.

Der Führungsring weist eine einfache und besonders kostengünstig herstellbare Bauform auf. Er kann einteilig ausgebildet sein und durch Sintern oder 3D-Druck produziert werden.

Der Führungsring kann eine Durchlassöffnung für die Kolbenstange, einen bevorzugt einzelnen und ringförmigen Sammelkanal für das Fluid, insbesondere Hydraulikflüssigkeit, und einen oder mehrere dort angeschlossene und an der Außenseite des Führungsrings mündende Auslasskanäle aufweisen. Diese verbinden den Sammelkanal mit einem, Zwischenraum zwischen einem Innenrohr und einem Außenrohr des Zylinders in der erfindungsgemäßen Ausbildung als Doppelrohrzylinder. Evtl. durch die Kolbenstangenführung tretende Fluidteile können dadurch abgeführt und der Kolbenanordnung am anderen und inneren Ende der Kolbenstange zugeführt werden. Der bevorzugt zur Kolbenstange mittensymmetrische Sammelkanal kann auch mehrfach vorhanden sein.

Der Dichtring kann auf der Kolbenstangenführung stirnseitig angeordnet werden. Er kann auf der Kolbenstangenführung in axialer Richtung abgestützt und quer dazu, insbesondere in Radialrichtung, geführt sein. Der Dichtring kann auf der Kolbenstangenführung lose oder mit leichtem Klemmschluss über das äußere ringartige Dichtungsmittel aufliegen. Das äußere ringartige Dichtungsmittel kann außenseitig an der Kolbenstangenführung anliegen und hierüber radial geführt sein. Die Kolbenstangenführung übt dabei keine signifikanten Querkräfte oder Radialkräfte auf den Stützring aus und hat auch keinen Einfluss auf die Anpressung des inneren ringartigen und lippenartigen Dichtungselements an der Kolbenstange. Hierfür ist ausschließlich der rohrartige Ringabschnitt des eigensteifen Stützrings vorgesehen und verantwortlich.

Der Dichtring kann in seiner Lage am Stirnende der Kolbenstangenführung gesichert werden, z.B. durch einen Deckel, insbesondere eine Randumbördelung, des Zylinders. Ansonsten schwebt der Dichtring über dem bodenseitigen Sammelkanal des Führungsrings und dichtet diesen Fluidaufnahmeraum in Axialrichtung zum stirnseitigen Zylinderende und auch in Querrichtung bzw. Radialrichtung ab. Der Fluidaufnahmeraum ist vom hohen Fluiddruck im Zylinderinnenraum entkoppelt. Der Kontaktbereich zwischen dem Dichtring und der Kolbenstangenführung kann sich auf die Abstützung und Führung am Außenrand des Dichtrings beschränken.

Der Führungsring kann im Zylinder und an dessen stirnseitigem Ende in beliebig geeigneter Weise angeordnet und geführt bzw. fixiert sein. Bei der Ausbildung als Doppelrohrzylinder kann der Führungsring auf dem axial verkürzten Innenrohr aufsitzen und kann durch den besagten Deckel, insbesondere die Randumbördelung des Außenrohrs, in Position gehalten und ggf. eingespannt werden.

In den Unteransprüchen sind weitere vorteilhafte Ausgestaltungen der Erfindung angegeben.

Die beanspruchte Zylinderdichtung und der damit ausgerüstete Doppelrohrzylinder können folgende Ausgestaltungen aufweisen, die einzeln oder in beliebiger Kombination eingesetzt werden können.

Die Ringabschnitte des abgewinkelten Stützrings des Dichtrings können quer zueinander, insbesondere senkrecht zueinander, ausgerichtet sein.

Die Ringabschnitte des abgewinkelten Stützrings des Dichtrings können am Rand der inneren Stützringöffnung mit einer bevorzugt runden Biegung ineinander übergehen.

Der rohrartige Ringabschnitt des Stützrings kann in Axialrichtung eine gerade, bevorzugt zylindrische, Form oder eine Konusform aufweist. Bevorzugt erweitert sich die Konusform vom scheibenartigen Ringabschnitt ausgehend und in Richtung zur Kolbenstangenführung.

Die Innenkontur des rohrartigen Ringabschnitts des Stützrings kann an die äußere Mantelkontur der Kolbenstange angepasst sein.

Der von der inneren Stützringöffnung nach außen erstreckte scheibenförmige Ringabschnitt des Stützrings kann dazu vorgesehen und ausgebildet sein, in Einbaustellung den Freiraum zwischen der zentralen Kolbenstange und dem Innenumfang des Zylinders zumindest weitestgehend abzudecken.

Das Dichtungsmittel des Dichtrings kann mehrere, bevorzugt miteinander verbundene, Dichtungselemente aufweisen.

Das innenseitige Dichtungselement kann an seinem Außenumfang einen radial oder schräg nach außen vorspringenden Ansatz aufweisen, der einen axialen freien Rand des rohrartigen Ringabschnitts bedeckt. Des Ringabschnitt kann am Außenumfang des innenseitigen Dichtungselements befestigt, insbesondere eingebettet, sein.

Der Innendurchmesser des rohrartigen Ringabschnitts und das innenseitige Dichtungselement, insbesondere dessen Innenumfang, sind an den Außendurchmesser der Kolbenstange angepasst. Diese Anpassung ist derart, dass das innenseitige Dichtungselement zwischen der Kolbenstange und dem rohrartigen Ringabschnitt eingespannt wird.

Das Dichtungsmittel kann mehrere, ggf. miteinander verbundene Dichtungselemente aufweisen. Das Dichtungsmittel kann ein ringartiges Dichtungselement aufweisen, das zwischen einem innenseitigen und einem außenrandseitigen Dichtungselement angeordnet ist und eine Seite des scheibenartigen Ringabschnitts bedeckt.

Der mit der Zylinderdichtung ausgerüstete Zylinder ist als Doppelrohrzylinder ausgebildet. Die Zylinderdichtung ist dabei zwischen einem Innenrohr und einem Deckel am Zylinderende eingespannt.

Der Dichtring kann nur an einem außenrandseitigen und bevorzugt sockelartigen Aufnahmemittel des Führungsrings einen Berührungskontakt mit dem Führungsring haben. Der Dichtring kann hier axial abgestützt und an seinem Außenumfang von außen her radial und ggf. mit leichtem Klemmschluss über ein randseitiges Dichtungselement geführt sein. An den anderen Bereichen, insbesondere im Bereich des innenseitigen Dichtungselements, kann der Dichtring mit Führungsring nicht in Berührungskontakt stehen. Der Dichtring und kann hier vom Führungsring distanziert sein.

Die Erfindung ist in den Zeichnungen beispielhaft und schematisch dargestellt. Im Einzelnen zeigen:
- Figur 1:: einen Zylinder mit einer innenseitigen, verborgenen Zylinderdichtung in einer perspektivischen Außenansicht,
- Figur 2:: den Zylinder mit der Zylinderdichtung von Figur 1 in einem Längsschnitt,
- Figur 3:: eine vergrößerte geschnittene und perspektive Darstellung der Zylinderdichtung und ihrer Einbaustellung am stirnseitigen Zylinderende und an der Austrittsseite einer oszillierenden Kolbenstange,
- Figur 4:: eine vergrößerte Darstellung eines Ausschnitts IV von Figur 2,
- Figur 5:: eine Zylinderdichtung mit einem Dichtring und einer Kolbenstangenführung in einem Querschnitt und in Montagestellung,
- Figur 6:: eine perspektivische Ansicht der Zylinderdichtung an einer abgebrochen dargestellten Kolbenstange,
- Figur 7:: eine Explosionsdarstellung der Zylinderdichtung mit ihrem Dichtring und einer Kolbenstangenführung,
- Figur 8:: eine perspektivische und teilweise geschnittene Darstellung eines Führungsrings der Kolbenstangenführung,
- Figur 9:: eine perspektivische Außenansicht des Dichtrings,
- Figur 10:: den Dichtring von Figur 9 in einer Frontansicht,
- Figur 11:: einen Querschnitt durch den Dichtring gemäß Schnittlinie XI/XI von Figur 10,
- Figur 12:: eine vergrößerte Darstellung des Details II von Figur 11,
- Figur 13 und 14:: eine Variante des Dichtrings in verschiedenen Ansichten und
- Figur 15 und 16:: eine weitere Variante des Dichtrings in verschiedenen Ansichten.

Die Erfindung betrifft eine Zylinderdichtung (2) für einen Zylinder (1), nämlich einen Doppelrohrzylinder. Die Erfindung betrifft ferner einen mit einer Zylinderdichtung (2) ausgerüsteten Doppelrohrzylinder (1).

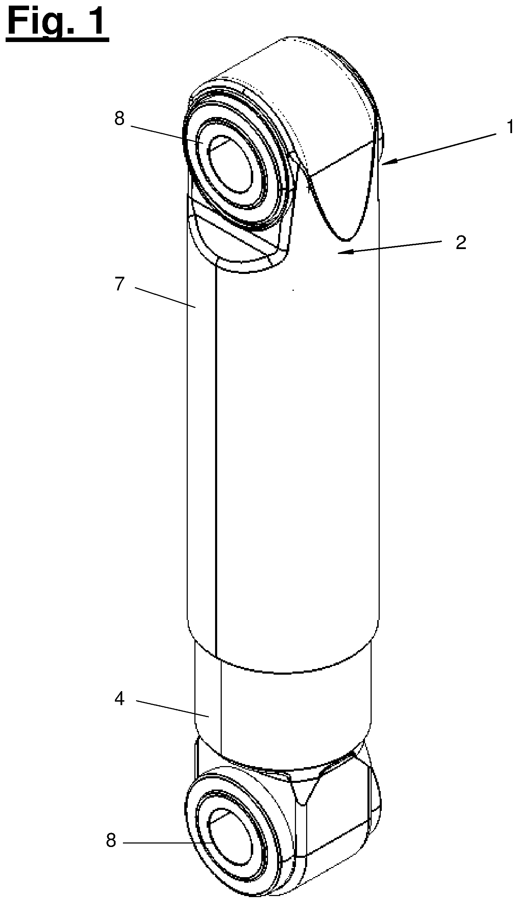

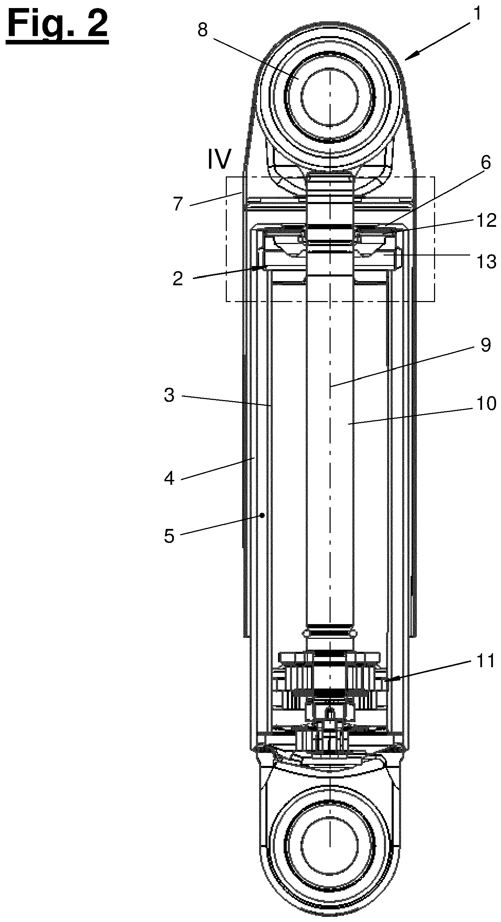

Figur 1 und 2 zeigen einen Zylinder (1) in perspektivischer Außenansicht und in einem Längsschnitt. Der Zylinder (1) weist eine nachfolgend erläuterte Zylinderdichtung (2) auf.

Der Zylinder (1) ist als fluidischer Zylinder, insbesondere als Hydraulikzylinder, und im Weiteren als Doppelrohrzylinder ausgebildet. Der Zylinder (1) weist eine Längsachse oder Rohrachse (9) und eine in Axialrichtung ein- und ausfahrbare Kolbenstange (10) auf. Diese weist an ihrem inneren Ende eine Kolbenanordnung (11) auf, die in einem Zylinderinnenraum angeordnet ist und diesen in zwei Arbeitsräume unterteilt. Die Kolbenanordnung (11) ist in üblicher Weise mit einer Drosselanordnung für den Durchlass eines in den Arbeitsräumen befindlichen Fluids ausgestattet.

Das andere freie und außerhalb des Zylinderinnenraums befindliche Ende der Kolbenstange (10) ist mit einem Anschluss (8), z.B. einem Lagerauge, verbunden. Der Zylinder (1) kann am anderen und gegenüberliegenden Ende eine mit dem Zylinderkorpus verbundenen gleichen oder anderen Anschluss (8) aufweisen.

Der Zylinder (1) ist in der gezeigten Ausführungsform als Stoßdämpfer ausgebildet. Er ist besonders für hohe Belastungen, z.B. bei Schwerlastfahrzeugen, ausgelegt. Der Zylinder (1) und die Zylinderdichtung (2) sind außerdem für einen Einsatz unter stark schwankenden Umgebungsbedingungen mit hohen Temperaturunterschieden von ca. -40°C bis ca. 180°C ausgebildet und geeignet.

Der gezeigte Doppelrohrzylinder (1) weist ein Innenrohr (3) und ein mit radialem Abstand dazu angeordnetes Außenrohr (4) auf. Das Innenrohr (3) umschließt den vorgenannten inneren Zylinderraum bzw. Arbeitsraum. Zwischen den parallelen und konzentrischen Rohren (3,4) ist ein z.B. ringförmiger Zwischenraum (5) vorhanden, in den an der Zylinderdichtung (2) und an der Kolbenstange (10) austretende Hydraulikflüssigkeit, insbesondere Hydrauliköl eintreten und zur Kolbenanordnung (11) zurückfließen kann.

Der Zylinder (1) ist am einen kolbenseitigen Ende durch einen festen Boden verschlossen. Am anderen und zur Austrittstelle der Kolbenstange (10) gelegenen Stirnende des Zylinders (1) ist ein Deckel (6) vorhanden, der die Stirnseite zumindest teilweise und ggf. auch in Verbindung mit der Zylinderdichtung (2) verschließt. Der Deckel (6) kann z.B. als Randumbördelung des Außenrohrs (4) ausgebildet sein.

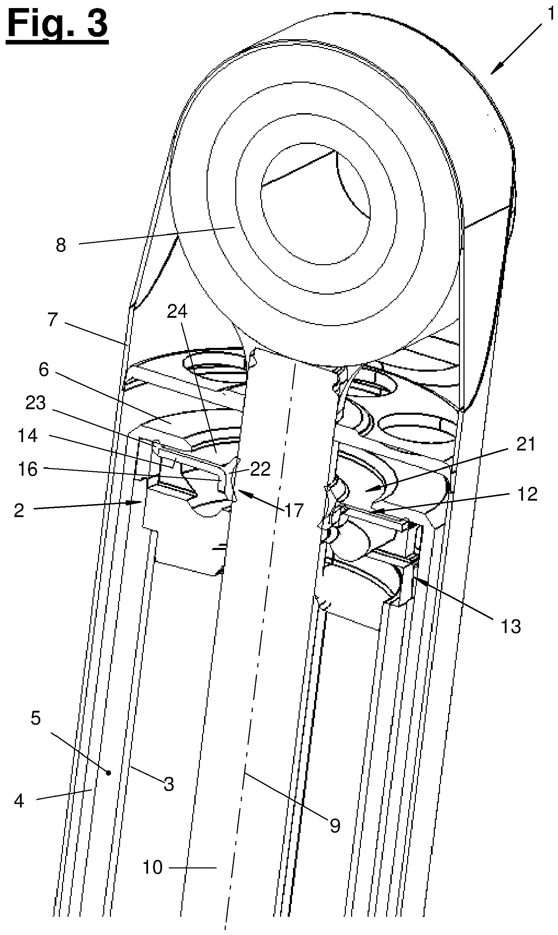

Der Zylinder (1) kann ferner ein Schutzrohr (7) aufweisen, welches das Außenrohr (4) konzentrisch und mit geringem Abstand bzw. dicht umschließt. Das Schutzrohr (7) ist relativ zum Außenrohr (4) beweglich und ist mit der Kolbenstange (10) in geeigneter Weise verbunden. Es kann z.B. über den Anschluss (8) gestülpt und am oberen Ende der Kolbenstange (10) eingeclipst sein. Figur 3 verdeutlicht diese Anordnung.

Der gezeigte Zylinder (1) hat im Querschnitt eine kreisrunde Ausbildung. Alternativ ist eine andere Querschnittsform, z.B. oval, prismatisch oder dergleichen möglich. Gleiches gilt für die Querschnittsform der Kolbenstange (10), die im gezeigten Ausführungsbeispiel zylindrisch ist.

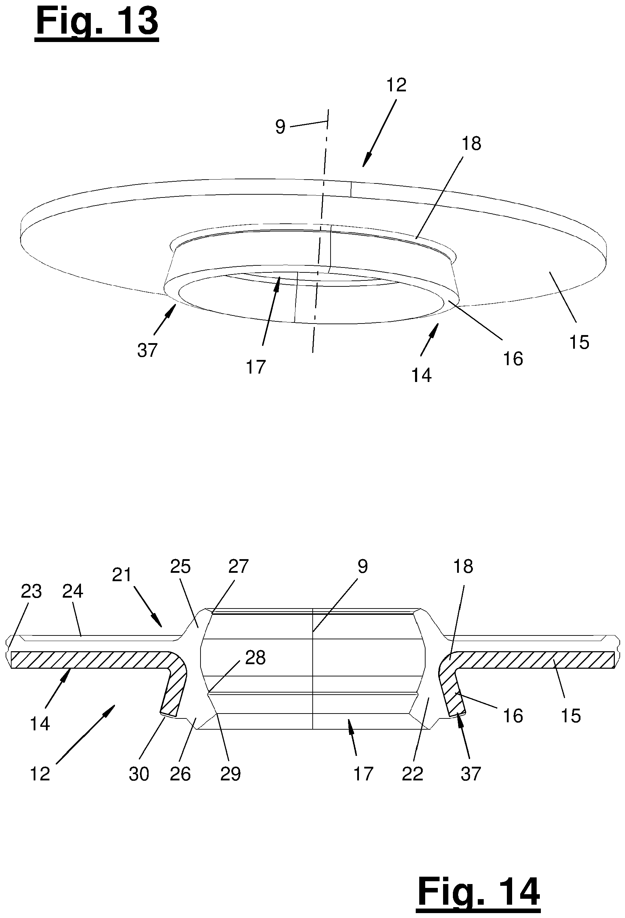

Die in Figur 3 bis 12 näher dargestellte Zylinderdichtung (2) weist zumindest einen Dichtring (12) auf. Sie kann außerdem eine Kolbenstangenführung (13) umfassen. Figur 13 und 14 sowie Figur 15 und 16 zeigen zwei Varianten des Dichtrings (12).

Die Zylinderdichtung (2) ist im Zylinder (1) an dessen Stirnseite angeordnet, an der auch die Kolbenstange (10) nach außen tritt. Die Zylinderdichtung (2) dient zur Abdichtung der oszillierenden Kolbenstange (10) und auch der Stirnseite des Zylinders (1).

Der Dichtring (12) weist einen Stützring (14) und ein Dichtungsmittel (21) auf, welches auf dem Stützring (14) fest angeordnet, insbesondere aufvulkanisiert ist. Der Dichtring (12) ist einteilig bzw. als einzelnes Komplettbauteil ausgebildet.

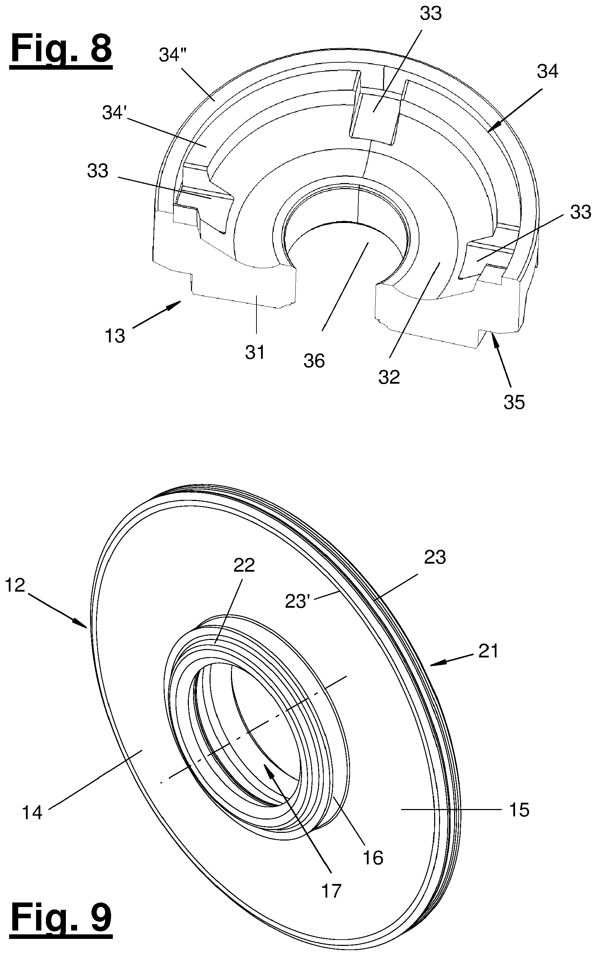

Wie insbesondere Figuren 9 bis 12 verdeutlichen, weist der Stützring (14) eine abgewinkelte Querschnittsform mit einem scheibenartigen Ringabschnitt (15) und einem rohrartigen Ringabschnitt (16) auf. Der Stützring (14) ist einteilig ausgebildet. Er kann z.B. als Stanz- und Biegeteil ausgeführt sein.

Der scheibenartige Ringabschnitt (15) erstreckt sich quer zur Längsachse (9), wobei er senkrecht oder schräg zur Längsachse (9) ausgerichtet sein kann. Der scheibenartige Ringabschnitt (15) weist eine innere Ringöffnung (17) auf, an welcher der rohrartige Ringabschnitt (16) angeordnet ist. Der rohrartige Ringabschnitt (16) hat in der gezeigten Ausführungsform eine zylindrische Form und ist längs der Achse (9) bzw. der Kolbenstange (10) ausgerichtet.

Die Ringabschnitte (15,16) gehen am Rand der Ringöffnung (17) mit einer bevorzugt runden Biegung (18) ineinander über. Alternativ ist eine andere Ausbildung möglich. Der rohrartige Ringabschnitt (16) steht vom scheibenförmigen Ringabschnitt (15) in Richtung zur Kolbenanordnung (11) ab und weist vom besagten stirnseitigen Zylinderende und dem Kolbenstangenaustritt weg.

Der Stützring (14) besteht aus einem mechanisch stabilen und temperaturfesten Material, z.B. Metall, insbesondere Stahl. Der Stützring (14) ist z.B. als dünnwandiges Blechteil ausgebildet. Die Ringabschnitte (15,16) können parallele Innen- und Außenflächen aufweisen. Der Stützring (14) ist selbsttragend und eigenstabil ausgebildet. Er wird mitsamt des Dichtungsmittels (21) bei der Montage auf der Kolbenstange (10) aufgesteckt. Der rohrartige Ringabschnitt (16) umschließt dabei die Kolbenstange (10) mit einem gewissen seitlichen, insbesondere radialen, Abstand, in dem ein nachfolgend erläutertes Dichtungselement (22) des Dichtungsmittels (21) eingespannt und vom Stützring (14) gehalten wird.

Der rohrartige Ringabschnitt (16) weist in der gezeigten Ausführungsform einen in Umfangsrichtung geschlossenen Ringkorpus auf. Der Ringkorpus hat in seiner Axialrichtung eine gerade und z.B. zylindrische Form. Er erstreckt sich in Einbaustellung entlang der Längsachse (9). In der gezeigten Ausführung ist die Erstreckung konzentrisch und parallel zur Achse (9). Der Ringkorpus hat z.B. eine konstante Wanddicke und parallele innere und äußere Ringwände.

Der Stützring (14), insbesondere der rohrartige Ringabschnitt (16), weist an der Ringöffnung (17) eine glatte Wandung (20) auf. Dies ist im gezeigten Ausführungsbeispiel eine zylindrische Wandung. Die Wandung (20) erstreckt sich längs der Achse (9) in gerader Richtung und hat bevorzugt keine zur Kolbenstange (10) gerichteten Vorsprünge.

Der scheibenartige Ringabschnitt (15) weist die bevorzugt kreisrunde Ringöffnung (17) an der Innenseite und an der Außenseite einen bevorzugt kreisrunden und zur Achse (9) konzentrischen Außenrand (19) auf. Alternativ ist eine andere, z.B. ovale oder prismatische Formgebung möglich.

Die Innenkontur des rohrartigen Ringabschnitts (16) ist an die äußere Mantelkontur der Kolbenstange (10) angepasst. Im gezeigten Ausführungsbeispiel sind die besagten Konturen kreisrund bzw. zylindrisch und konzentrisch zur Achse (9).

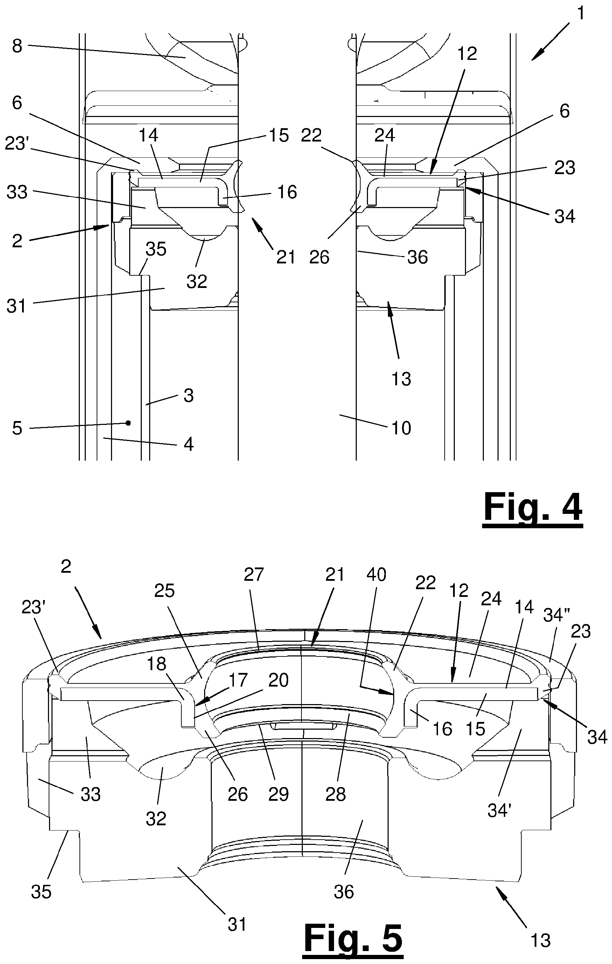

In der in Figur 3 und 4 gezeigten Einbaustellung erstreckt sich der scheibenförmige Ringabschnitt (15) von der inneren Ringöffnung (17) quer zur Achse (9) nach außen. Er deckt dabei in Einbaustellung den Freiraum zwischen der zentralen Kolbenstange (10) und dem Innenumfang des Zylinders (1), insbesondere des Innenrohrs (3) ab. Die Abdeckung wirkt an der Stirnseite nach außen gegenüber der besagten Randumbördelung des Außenrohrs (4).

Das Dichtungsmittel (21) ist auf dem Stützring (14) in der erwähnten Weise bevorzugt aufvulkanisiert. Das Dichtungsmittel (21) besteht aus einem kompressiblen und elastisch verformbaren Dichtmaterial, insbesondere aus einem Kunststoff, vorzugsweise einem Polymer. Das Dichtmaterial ist für den Einsatz im gesamten besagten Temperaturbereich von ca. -40°C bis ca. 180°C geeignet und ausgelegt. Das Dichtmaterial ist z.B. als fluoriertes Elastomer, insbesondere Fluorkautschuk, bevorzugt Fluorkarbonkautschuk (FKM), ausgebildet.

Das Dichtungsmittel (21) weist bevorzugt mehrere Dichtungselemente (22,23,24) auf, die miteinander verbunden sein können. Das Dichtungsmittel (21) bedeckt den Stützring (14) jeweils umfangseitig an der Ringöffnung (17) und am Außenrand (19) sowie an der zum Zylinderende weisenden Außenseite. Die Bedeckung ist in der gezeigten Ausführungsform durchgängig.

Das Dichtungsmittel (21) weist zumindest ein innenseitiges und ringartiges Dichtungselement (22) auf, welches zur dichtenden Anlage am Mantel der Kolbenstange (10) vorgesehen und ausgebildet ist. Es ist als flexible Dichtlippe ausgebildet und ist an der Ringöffnung (17) an der Innenseite des rohrartigen Ringabschnitts (16), angeordnet.

Das innenseitige Dichtungselement (22) wird an seinem Außenumfang vom rohrartigen Ringabschnitt (16) und dessen Wandung (20) abgestützt. Zudem kann eine Abstützung in Axialrichtung (9), insbesondere am freien Ende des rohrförmigen Ringabschnitts (16), erfolgen.

Das innenseitige Dichtungselement (22) weist zwei Lippenabschnitte (25,26) auf, die in Axialrichtung (9) beidseits über den rohrartigen Ringabschnitt (16) hinaus ragen. In einer anderen Ausführungsform ist nur ein einzelner Lippenabschnitt möglich, der einseitig über den rohrartigen Ringabschnitt (16) hinaus ragt. Die Zahl der Lippenabschnitt kann auch größer als zwei sein.

In Einbaustellung weist der Lippenabschnitt (25) in Axialrichtung (9) zum benachbarten stirnseitigen Zylinderende. Er kann z.B. eine Staubschutzlippe bilden. Der Lippenabschnitt (26) weist in Gegenrichtung zur Kolbenstangenführung (13) hin. Er ragt axial über das freie Ende des Ringabschnitts (16) hinaus.

An den Lippenabschnitten (25,26) kontaktiert das innenseitige Dichtungselement (22) die Kolbenstange (10). Diese hat im im Bereich des innenseitigen Dichtungselements (22) vorzugsweise eine zylindrische und in Axialrichtung (9) gerade Umfangsform.

Das innenseitige Dichtungselement (22) weist an seinem Innenumfang im Querschnitt gesehen eine in Axialrichtung (9) erstreckte gewölbte Kontur (40) auf, die von der Kolbenstange (10) radial weg weisend ausbaucht. Die gewölbte Kontur (40) ist in Axialrichtung (9) gesehen zwischen den Enden der axial überstehenden Lippenabschnitte (25,26) angeordnet. Der Scheitel (41) der gewölbte Kontur (40) liegt auf Höhe der Biegung (18).

Am Innenumfang des innenseitigen Dichtungselements (22) sind mehrere, z.B. drei, Vorsprünge (27,28,29) mit radialer oder schräger Ausrichtung angeordnet. Wie Figur 5 und 9 bis 11 verdeutlichen, bilden die Vorsprünge (27,28,29) z.B. Ringe. Die lokalen und bevorzugt nach innen zur Achse (9) im Querschnitt spitz oder gerundet zulaufenden Vorsprünge (27,28,29) liegen am Mantel der oszillierenden Kolbenstange (10) an.

Zumindest zwei Vorsprünge (27,29) befinden sich an den axial überstehenden Lippenabschnitten (25,26). Ein Vorsprung (27) ist z.B. am Endbereich des einen Lippenabschnitts (25,26) und ein anderer Vorsprung (29) ist am Endbereich des anderen Lippenabschnitts (26) angeordnet. Zumindest ein solcher Vorsprung (27,29) ist axial vom Stützring (14) beabstandet. Vorzugsweise sind beide Vorsprünge (27,29) axial vom Stützring (14) distanziert. Der Vorsprung (29) an dem Lippenabschnitt (26) hat in Richtung zur Kolbenstangenführung (13) einen axialen Abstand vom freien Ende des Ringabschnitts (16).

Ein weiterer Vorsprung (28) kann an einem Bereich des innenseitigen Dichtungselements (22) angeordnet sein, der sich in Axialrichtung (9) auf Höhe des Stützrings (14), insbesondere des Ringabschnitts (16), befindet.

In ihrem jeweiligen Überstandsbereich gegenüber dem Stützring (14) können sich die Lippenabschnitte (25,26) mit ihrem Vorsprung (27,29) jeweils quer zur Längsachse (9) biegeelastisch verformen und an temperaturbedingte Formänderungen der Kolbenstange (10) und des Stützrings (14) anpassen sowie die Dichtwirkung aufrecht erhalten.

Die Vorsprünge (27,28,29) können in beliebige geeigneter Weise am innenseitigen Dichtungselement (22) angebracht werden. Sie können z.B. aus einem Vollmaterial des Dichtungselements (22) durch Umformen, insbesondere Schneiden, herausgearbeitet werden. Dies kann nach erfolgter fester Verbindung des Dichtungsmittels (21) mit dem Stützring (14) erfolgen. Alternativ sind andere Applikationstechniken, z.B. durch Anformen, möglich.

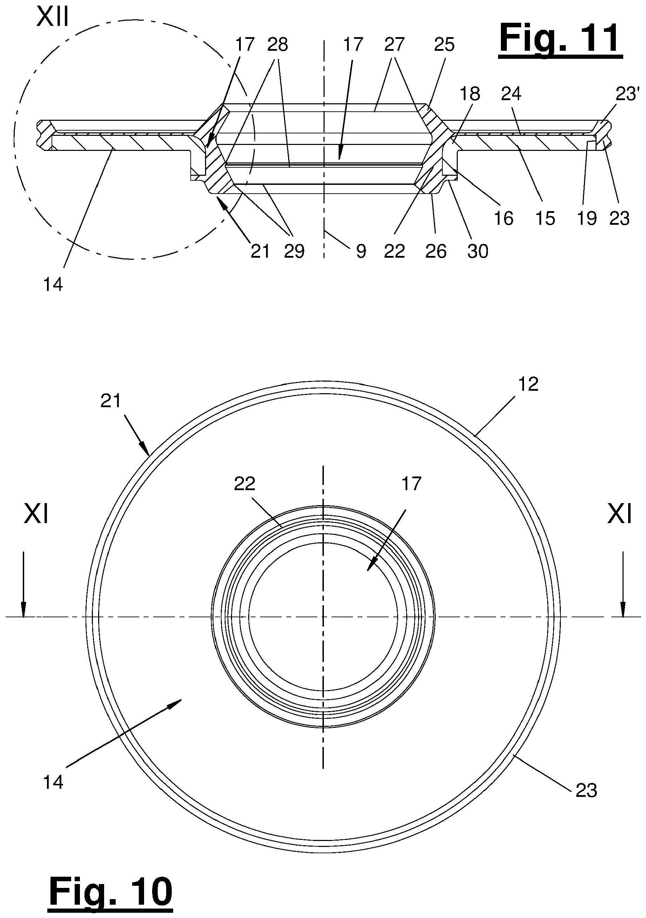

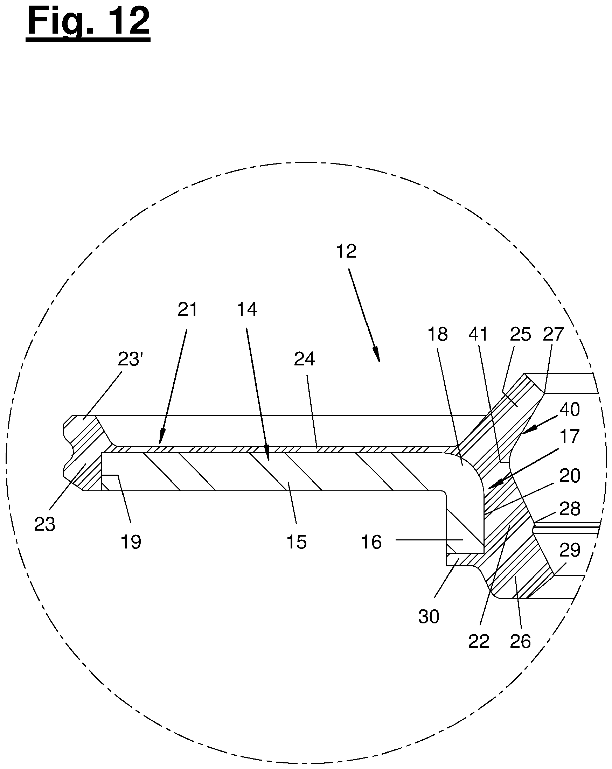

Wie Figur 11 und 12 verdeutlichen, ist der rohrartige Ringabschnitt (16) am Außenumfang des innenseitigen Dichtungselements (22) eingebettet. Seine glatte Wandung (20) stützt dabei das mit seinem Außenumfang hier anliegende Dichtungselement (22) in Radialrichtung ab.

Ein radial nach außen vorspringender Ansatz (30) am Außenumfang des Dichtungselements (22) bedeckt den axialen freien Rand des rohrartigen Ringabschnitts (16). Der Ansatz (30) ist z.B. am axial über den besagten freien Rand in Richtung zur Kolbenstangenführung (13) hin überstehenden Lippenabschnitt (26) angeformt.

Die zum Zylinderinnenraum weisenden anderen Oberflächen des Stützrings (14) sind z.B. nicht vom Dichtungsmittel (21) bedeckt. Diese Oberfläche am scheibenartigen Ringabschnitt (15) kann zu Lager- und Abstützzwecken dienen, z.B. bei einem Schneiden der Vorsprünge (27,28,29) .

Der Innendurchmesser des rohrartigen Ringabschnitts (16) und das innenseitige Dichtungselement (22) sind an den Außendurchmesser der Kolbenstange (10) angepasst. Die Anpassung ist derart, dass in Einbaustellung das besagte Dichtungselement (22) zwischen der Kolbenstange (10) und dem rohrartigen Ringabschnitt (16) eingespannt ist. Figur 2 und 4 verdeutlichen diese Anordnung.

Das Dichtungsmittel (21) weist z.B. ein weiteres, außenseitiges Dichtungselement (23) auf, das bevorzugt ringartig und als äußere Dichtlippe ausgebildet ist. Ein ringförmiger Elementrand (23'), insbesondere Dichtlippenrand, kann abstehen und in Einbaustellung zum benachbarten stirnseitigen Zylinderende weisen. Das außenseitige Dichtungselement (23) dient zur dichtenden Anlage am Zylinder (1) oder an einem anderen Teil der Zylinderdichtung (2), insbesondere an einer Kolbenstangenführung (13). Das Dichtungselement (23) ist am Außenrand (19) des scheibenartigen Ringabschnitts (15) angeordnet.

Das Dichtungsmittel (21) weist z.B. ferner ein ringartiges Dichtungselement (24) auf, das zwischen den besagten innenseitigen und außenseitigen Dichtungselementen (22,23) angeordnet ist und eine Seite des scheibenartigen Ringabschnitts (15) bedeckt. Dies ist die zum stirnseitigen Zylinderende und zur Austrittsstelle der Kolbenstange (10) gerichtete Seite. Dieses Dichtungselement (24) kann als dünnwandiger Belag auf der Oberfläche des scheibenartigen Ringabschnitts (15) ausgebildet sein.

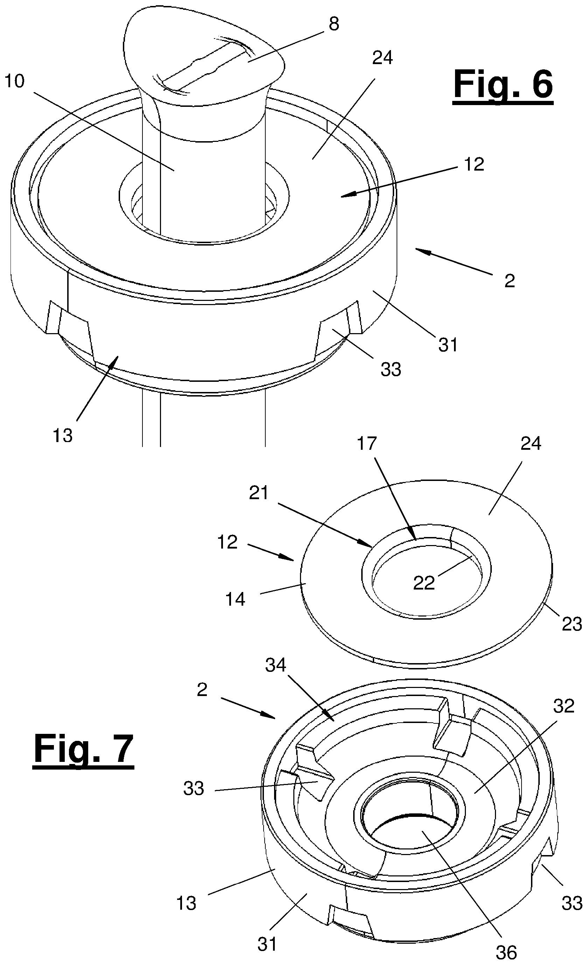

Die Kolbenstangenführung (13) weist einen in Figur 2 bis 8 näher dargestellten Führungsring (31) auf. Der Führungsring (31) kann z.B. als Sinterbauteil oder als gedruckter 3D-Formkörper ausgebildet sein. Der Führungsring (31) besteht bevorzugt aus Metall. Der Dichtring (12) ist auf dem Führungsring (31) an dessen oberer Stirnseite aufgesetzt und abgestützt sowie bevorzugt formschlüssig am Außenrand geführt. Figur 6 und 7 verdeutlichen diese Anordnung.

Der Führungsring (31) weist eine zentrale Durchlassöffnung (36) für die Kolbenstange (10) auf. Der Führungsring (13) hat in der gezeigten Ausführungsform eine zur Achse (9) konzentrische und zylindrische Ringform.

Der Führungsring (31) weist einen ringförmigen Sammelkanal (32) für die Hydraulikflüssigkeit auf, die bei der Kolbenstangenbewegung evtl. den Dichtring (12) passiert. Der Sammelkanal (32) kann im Querschnitt eine vertiefte Wannenform aufweisen. Vorzugsweise ist nur ein einzelner Sammelkanal (32) vorhanden. Der Sammelkanal (32) umgibt die Durchlassöffnung (36) und schließt an deren Ringwandung an.

Am Sammelkanal (32) sind in Querrichtung, insbesondere radial, ein oder mehrere, z.B. schlitzartige Auslasskanäle (33) angeschlossen, die gern. Figur 4, 5 und 7 eine abgewinkelte Form haben und an der Außenseite des Führungsrings (31) in Axialrichtung (9) münden. Die Mündungsstelle befindet sich im Bereich des Zwischenraums (5), so dass aus dem gefüllten Sammelkanal (32) Hydraulikflüssigkeit über den gegenüber dem Kanalboden erhöhten Auslasskanal (33) radial austreten und dann nach unten in den Zwischenraum (5) abfließen kann. Die Fluidhöhe im Sammelkanal (32) wird dadurch begrenzt. In Richtung zum stirnseitigen Zylinderende ist der Führungsring (31) und sein Sammelkanal (32) durch den darüber mit axialem Abstand schwebenden Dichtring (12) abgedeckt.

Der Führungsring (31) weist ein z.B. als abgestufter Ringsockel ausgebildetes Aufnahmemittel (34) zur formschlüssigen und dichtenden Aufnahme des Dichtrings (12) auf. Figur 5, 6 und 7 verdeutlichen diese Anordnung. Der Dichtring (12) wird vom Ringsockel in Axialrichtung (9) abgestützt sowie an seinem Außenumfang umschlossen und außenseitig radial geführt. Der Ringsockel weist hierfür eine radial erstreckte Sockelfläche (34') für die Auflage des Dichtrings (12) und einen hiervon axial abstehenden ringförmigen Sockelrand (34") auf.

In der Einbaustellung liegt der Dichtring (12) mit seinem äußeren Randbereich auf dem Aufnahmemittel (34) des Führungsrings (31). Der Dichtring (12) schwebt mit axialem Abstand über dem bodenseitigen Sammelkanal (32) und auch über dem oder den Auslasskanälen (33) des Führungsrings (31). Der Dichtring (12) dichtet diesen Fluidaufnahmeraum in Axialrichtung zum stirnseitigen Zylinderende und auch in Querrichtung bzw. Radialrichtung ab. Der Dichtring (12) hat bevorzugt außer am Aufnahmemittel (34) keinen weiteren Berührungskontakt mit dem Führungsring (31). Der überstehende Lippenabschnitt (26) des inneren Dichtungselements (22) ist axial vom Sammelkanal (32) und von der dortigen Ringwandung an der Durchlassöffnung (36) distanziert. An diesem Bereich liegt die Kolbenstange (10) frei, wobei hier evtl. Leckage von Hydraulikflüssigkeit austreten und in den Sammelkanal (32) fließen kann.

In der Einbaustellung drücken der Deckel (6), insbesondere die Randumbördelung des Außenrohrs (4), den Dichtring (12) gegen das Aufnahmemittel (34). Der Stützring (14) liegt mit seiner blanken Unterseite des scheibenartigen Ringabschnitts (15) auf der Sockelfläche (34") des Aufnahmemittels (34) an. Die Dichtungselemente (23,24) werden durch den Deckel (6) bzw. die Randumbördelung leicht gequetscht und dichtend verformt. Der Deckel (6) bzw. die Randumbördelung kann gemäß Figur 4 eine Ringnut zur formschlüssigen und dichtenden Aufnahme des hochstehenden Lippenrands (23') aufweisen.

In der perspektivischen Ansicht von Figur 13 und der geschnittenen Ansicht von Figur 14 ist eine erste Variante des Dichtrings (12), insbesondere des Stützrings (14), gezeigt. Das Dichtungsmittel (21) ist in Figur 13 nicht dargestellt. Der rohrartige Ringabschnitt (16) weist in dieser Variante in seiner Axialrichtung eine Konusform (37) auf. Diese ist konzentrisch zur Achse (9) angeordnet und kann sich in Richtung zur Kolbenanordnung erweitern bzw. in Richtung zum Deckel (6) verjüngen. Die Biegung (18) ist stärker gekrümmt als im vorbeschriebenen Ausführungsbeispiel. Die axiale Länge des rohrartigen Ringabschnitts (16) kann länger als im vorigen Ausführungsbeispiel sein, wobei der axiale Überstand des Lippenabschnitts (26) kleiner sein kann. Der konische Ringabschnitt (16) kann eine geringere Steifigkeit als im vorigen Ausführungsbeispiel haben.

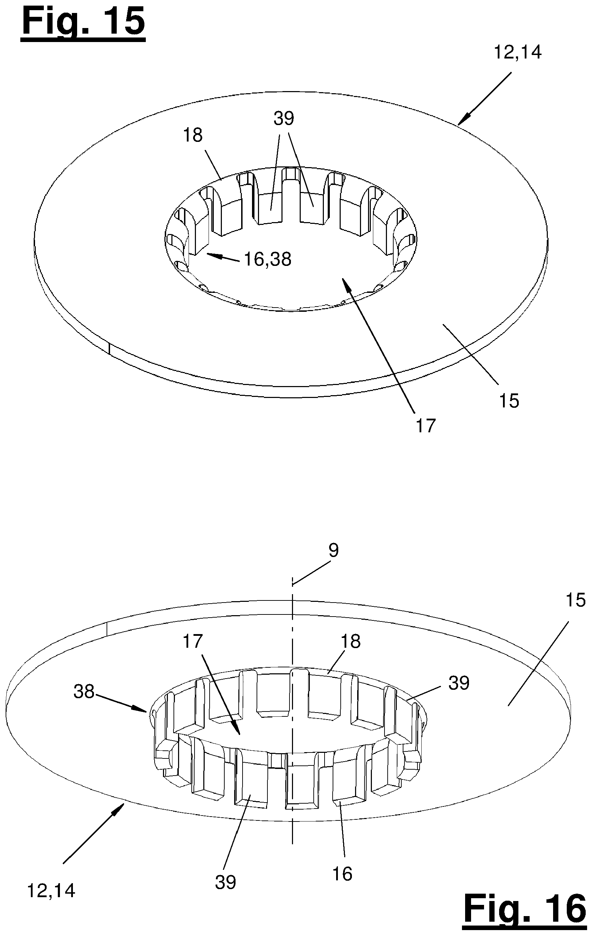

Figur 15 und 16 zeigen in einer jeweils perspektivischen Draufsicht und Unteransicht eine weitere Variante des Dichtrings (12), insbesondere des Stützrings (14), wobei das Dichtungsmittel (21) der Übersicht halber nicht dargestellt ist. Der Stützring (14) hat einen rohrartigen Ringabschnitt (16) mit einem Ringkorpus, der in Umfangsrichtung eine Segmentierung (38) aufweist. Hierdurch werden einzelne Korpusabschnitte bzw. Segmente (39) gebildet, die an ihrem zur Übergansstelle (18) oder Biegung gerichteten Fußbereich mit dem scheibenartigen Ringabschnitt (15) verbunden sein können. Durch die Segmentierung (38) in Umfangsrichtung können die Segmente (39) sich quer zur Längsachse (9) unabhängig voneinander bedarfsweise bewegen. Die Segmente (39) können ausgehend von der Ringöffnung (17) in Richtung zur Kolbenstange (10) vorgebogen oder vorgespannt sein und können jeweils in Einbaustellung eine Federwirkung auf das Dichtungsmittel (21) ausüben. In Umfangsrichtung können die Segmente (39) eng benachbart sein und ggf. aneinander anstoßen. Sie können alternativ beabstandet sein, wobei die entsehenden Lücken mit Dichtmittelmaterial gefüllt sind.

Abwandlungen der gezeigten und beschriebenen Ausführungsformen sind im Rahmen der Ansprüche in verschiedener Weise möglich. Insbesondere können die Merkmale des Ausführungsbeispiels und der genannten Varianten in unterschiedlicher Weise miteinander kombiniert, insbesondere vertauscht werden

### BEZUGSZEICHENLISTE

- 1: Zylinder, Doppelrohrzylinder
- 2: Zylinderdichtung
- 3: Innenrohr
- 4: Außenrohr
- 5: Zwischenraum
- 6: Deckel
- 7: Schutzrohr
- 8: Anschluss
- 9: Längsachse, Rohrachse
- 10: Kolbenstange
- 11: Kolbenanordnung
- 12: Dichtring
- 13: Kolbenstangenführung
- 14: Stützring
- 15: Ringabschnitt, scheibenartig
- 16: Ringabschnitt, rohrartig
- 17: Ringöffnung
- 18: Biegung
- 19: Außenrand
- 20: Wandung
- 21: Dichtungsmittel
- 22: Dichtungselement, Dichtlippe innen
- 23: Dichtungselement, Dichtlippe außen
- 23': Elementrand, Dichtlippenrand
- 24: Dichtungselement, Dichtungssteg
- 25: Lippenabschnitt
- 26: Lippenabschnitt
- 27: Vorsprung
- 28: Vorsprung
- 29: Vorsprung
- 30: Ansatz
- 31: Führungsring
- 32: Sammelkanal ringförmig
- 33: Auslasskanal radial
- 34: Aufnahme für Dichtring
- 34': Sockelfläche
- 34": Sockelrand
- 35: Abstufung
- 36: Durchlassöffnung
- 37: Konusform
- 38: Segmentierung
- 39: Korpusabschnitt, Segment
- 40: gewölbte Kontur
- 41: Scheitel

## Patentansprüche

1. Zylinderdichtung für einen Doppelrohrzylinder (1) mit einer in Axialrichtung (9) ein- und ausfahrbaren Kolbenstange (10), wobei die Zylinderdichtung (2) einen Dichtring (12) mit einem Stützring (14) und einem Dichtungsmittel (21) aufweist, wobei der Stützring (14) eine abgewinkelte Querschnittsform mit einem scheibenartigen Ringabschnitt (15) und einem rohrartigen Ringabschnitt (16) aufweist, wobei der rohrartige Ringabschnitt (16) an der inneren Ringöffnung (17) des scheibenartigen Ringabschnitts (15) angeordnet ist und sich in Einbaustellung entlang der Kolbenstange (10) erstreckt, wobei das Dichtungsmittel (21) ein innenseitiges, ringartiges, als flexible Dichtlippe ausgebildetes Dichtungselement (22) aufweist, das zur dichtenden Anlage am Mantel der Kolbenstange (10) vorgesehen und ausgebildet ist und an der Innenseite des rohrartigen Ringabschnitts (16), angeordnet ist, wobei das innenseitige Dichtungselement (22) an seinem Innenumfang mehrere radiale Vorsprünge (27,28,29) aufweist, wobei die Zylinderdichtung (2) für einen breiten thermischen Einsatzbereich von ca. -40°C bis ca. +180°C ausgelegt ist, wobei der abgewinkelte Stützring (14) eigensteif und selbsttragend sowie aus Metall, insbesondere Stahl, ausgebildet ist, wobei - wobei der Innendurchmesser des rohrartigen Ringabschnitts (16) und das innenseitige Dichtungselement (22) an den Außendurchmesser der Kolbenstange (10) derart angepasst sind, dass in Einbaustellung das innenseitige Dichtungselement (22) zwischen der Kolbenstange (10) und dem rohrartigen Ringabschnitt (16) eingespannt ist, **dadurch gekennzeichnet, dass** ein Vorsprung (29) an einem in Axialrichtung (9) über das freie Ende des rohrartigen Ringabschnitts (16) hinausragenden Lippenabschnitt (26) mit axialer Distanz zu diesem freien Ende angeordnet ist.

2. Zylinderdichtung nach Anspruch 1, **dadurch gekennzeichnet, dass** der rohrartige Ringabschnitt (16) einen in Umfangsrichtung geschlossenen oder segmentierten (38) Ringkorpus aufweist.

3. Zylinderdichtung nach einem der vorhergehenden Ansprüche, **dadurch gekennzeichnet, dass** das Dichtungsmittel (21) auf dem Stützring (14) bevorzugt fest angeordnet, insbesondere aufvulkanisiert, ist und mehrere, bevorzugt miteinander verbundene, Dichtungselemente (22,23,24) aufweist.

4. Zylinderdichtung nach einem der vorhergehenden Ansprüche, **dadurch gekennzeichnet, dass** das vollwandig und massiv ausgebildete innenseitige Dichtungselement (22) an seinem Außenumfang und ggf. in Axialrichtung (9) vom rohrartigen Ringabschnitt (16) abgestützt wird, wobei der rohrartige Ringabschnitt (16) am Außenumfang des innenseitigen Dichtungselements (22) anliegend befestigt und eingebettet ist.

5. Zylinderdichtung nach einem der vorhergehenden Ansprüche, **dadurch gekennzeichnet, dass** das innenseitige Dichtungselement (22) zumindest einen, vorzugsweise mehrere, insbesondere zwei, Lippenabschnitte (25,26) aufweist, die in Axialrichtung (9) beidseits über den Stützring (14), insbesondere den rohrartigen Ringabschnitt (16), hinausragen.

6. Zylinderdichtung nach Anspruch 5, **dadurch gekennzeichnet, dass** der jeweilige Lippenabschnitt (25,26) am axialen Überstand für eine dichtende Anlage am Mantel der Kolbenstange (10) ausgebildet ist.

7. Zylinderdichtung nach Anspruch 1, **dadurch gekennzeichnet, dass** der Dichtring (12) derart ausgebildet ist, dass die Anpresswirkung und die Anpresskräfte des innenseitigen Dichtungselements (22) an der Kolbenstange (10) ausschließlich aus dem steifen rohrartigen Ringabschnitt (16) und dessen Gestaltung entwickelt werden.

8. Zylinderdichtung nach einem der vorhergehenden Ansprüche, **dadurch gekennzeichnet, dass** das Dichtungsmittel (21) ein außenseitiges, bevorzugt ringartiges, Dichtungselement (23) am umfangseitigen Außenrand (19) des scheibenartigen Ringabschnitts (15) aufweist, das zur dichtenden Anlage am Zylinder (1) oder an einem anderen Teil der Zylinderdichtung (2) vorgesehen und ausgebildet ist.

9. Zylinderdichtung nach einem der vorhergehenden Ansprüche, **dadurch gekennzeichnet, dass** die Zylinderdichtung (2) eine Kolbenstangenführung (13) mit einem Führungsring (31) aufweist, welcher eine Durchlassöffnung (36) für die Kolbenstange (10), einen bevorzugt ringförmigen und einzelnen Sammelkanal (32) für Hydraulikflüssigkeit und einen oder mehrere dort angeschlossene und an der Außenseite des Führungsrings (31) mündende Auslasskanäle (33) aufweist.

10. Zylinderdichtung nach Anspruch 9, **dadurch gekennzeichnet, dass** die Auslasskanäle (33) des Führungsrings (31) dazu ausgebildet sind, den Sammelkanal (32) mit einem Zwischenraum (5) zwischen einem Innenrohr (3) und einem Außenrohr (4) des Doppelrohrzylinders (1) zu verbinden.

11. Zylinderdichtung nach einem der Ansprüche 9 oder 10, **dadurch gekennzeichnet, dass** der Dichtring (12) auf der Kolbenstangenführung (13) stirnseitig angeordnet ist und nur am Außenrand durch ein sockelartiges Aufnahmemittel (34) der Kolbenstangenführung (13) axial abgestützt und an seinem Außenumfang radial von außen geführt ist, wobei der Sammelkanal (32) durch den darüber mit axialem Abstand schwebenden Dichtring (12) abgedeckt ist.

12. Zylinderdichtung nach einem der Ansprüche 9 bis 11, **dadurch gekennzeichnet, dass** der überstehende Lippenabschnitt (26) des inneren Dichtungselements (22) axial vom Sammelkanal (32) und von der dortigen Ringwandung an der Durchlassöffnung (36) distanziert ist.

13. Doppelrohrzylinder mit einem Innenrohr (3), einem Außenrohr (4), einer Kolbenstange (10) und einer Zylinderdichtung (2), die am Zylinderende den Zylinder (1) und die Kolbenstange (10) abdichtet, **dadurch gekennzeichnet, dass** die Zylinderdichtung (2) nach mindestens einem der Ansprüche 1 bis 12 ausgebildet ist.

14. Doppelrohrzylinder nach Anspruch 13, **dadurch gekennzeichnet, dass** der Doppelrohrzylinder (1) als hydraulischer Stoßdämpfer, ausgebildet ist.

15. Doppelrohrzylinder nach Anspruch 13 oder 14, **dadurch gekennzeichnet, dass** der Führungsring (31) der Zylinderdichtung (2) auf dem axial verkürzten Innenrohr (3) des Doppelrohrzylinders (1) aufsitzt und durch einen Deckel (6) des Doppelrohrzylinders (1), insbesondere durch eine Randumbördelung des Außenrohrs (5), in Position gehalten und ggf. eingespannt wird.

## Claims

1. Cylinder seal for a double-tube cylinder (1) having a piston rod (10) which is retractable and extendable in an axial direction (9), wherein the cylinder seal (2) has a sealing ring (12) with a supporting ring (14) and with a sealing means (21), wherein the supporting ring (14) has an angled cross-sectional form with a disc-like ring portion (15) and with a tube-like ring portion (16), wherein the tube-like ring portion (16) is arranged at the inner ring opening (17) of the disc-like ring portion (15) and, in the fitting position, extends along the piston rod (10), wherein the sealing means (21) has an inner-side ring-like seal element (22) which is in the form of a flexible sealing lip and which is intended and configured for sealing abutment against the lateral surface of the piston rod (10) and which is arranged on the inner side of the tube-like ring portion (16), wherein the inner-side sealing element (22) has multiple radial projections (27, 28, 29) on its inner circumference, wherein the cylinder seal (2) is designed for a wide thermal usage range of approximately -40°C to approximately +180°C, wherein the angled supporting ring (14) is of inherently rigid and self-supporting form and is formed from metal, in particular steel, wherein the inner diameter of the tube-like ring portion (16) and the inner-side seal element (22) are adapted to the outer diameter of the piston rod (10) in such a way that, in the fitting position, the inner-side seal element (22) is clamped between the piston rod (10) and the tube-like ring portion (16), **characterized in that** a projection (29) on a lip portion (26) protruding beyond the free end of the tube-like ring portion (16) in an axial direction (9) is arranged at an axial distance from said free end.

2. Cylinder seal according to Claim 1, **characterized in that** the tube-like ring portion (16) has a circumferentially closed or segmented (38) ring body.

3. Cylinder seal according to either of the preceding claims, **characterized in that** the sealing means (21) is arranged, preferably fixedly, in particular is vulcanized, on the supporting ring (14) and has multiple seal elements (22, 23, 24) which are preferably connected to one another.

4. Cylinder seal according to one of the preceding claims, **characterized in that** the inner-side seal element (22), of solid-walled and solid form, is supported at its outer circumference and possibly in an axial direction (9) by the tube-like ring portion (16), wherein the tube-like ring portion (16) is embedded and fastened so as to abut against the outer circumference of the inner-side seal element (22).

5. Cylinder seal according to one of the preceding claims, **characterized in that** the inner-side seal element (22) has at least one, preferably multiple, in particular two, lip portions (25, 26) which protrude beyond the supporting ring (14), in particular the tube-like ring portion (16), on both sides in an axial direction (9).

6. Cylinder seal according to Claim 5, **characterized in that** the respective lip portion (25, 26) is formed on the axial protuberance for sealing abutment against the lateral surface of the piston rod (10).

7. Cylinder seal according to Claim 1, **characterized in that** the sealing ring (12) is formed in such a way that the pressing action and the pressing forces of the inner-side seal element (22) with respect to the piston rod (10) can be generated exclusively from the rigid tube-like ring portion (16) and the design thereof.

8. Cylinder seal according to one of the preceding claims, **characterized in that** the sealing means (21) has an outer-side, preferably ring-like, seal element (23) on the circumferential outer edge (19) of the disc-like ring portion (15), which seal element is intended and configured for sealing abutment against the cylinder (1) or against another part of the cylinder seal (2).

9. Cylinder seal according to one of the preceding claims, **characterized in that** the cylinder seal (2) has a piston-rod guide (13) with a guide ring (31), said guide ring having a passage opening (36) for the piston rod (10), having a preferably annular and single collecting channel (32) for hydraulic fluid and having one or more outlet channels (33) connected there that open out at the outer side of the guide ring (31).

10. Cylinder seal according to Claim 9, **characterized in that** the outlet channels (33) of the guide ring (31) are configured to connect the collecting channel (32) to an intermediate space (5) between an inner tube (3) and an outer tube (4) of the double-tube cylinder (1).

11. Cylinder seal according to either of Claims 9 and 10, **characterized in that** the sealing ring (12) is arranged on the piston-rod guide (13) at an end face and is supported, axially by a pedestal-like receiving means (34) of the piston-rod guide (13), only at the outer edge and is guided radially from the outside at its outer circumference, wherein the collecting channel (32) is covered by the sealing ring (12) hovering above it at an axial distance therefrom.

12. Cylinder seal according to one of Claims 9 to 11, **characterized in that** the protruding lip portion (26) of the inner seal element (22) is axially at a distance from the collecting channel (32) and from the ring wall of the passage opening (36) there.

13. Double-tube cylinder having an inner tube (3), having an outer tube (4), having a piston rod (10), and having a cylinder seal (2) which seals off, at the cylinder end, the cylinder (1) and the piston rod (10), **characterized in that** the cylinder seal (2) is designed according to at least one of Claims 1 to 12.

14. Double-tube cylinder according to Claim 13, **characterized in that** the double-tube cylinder (1) is in the form of a hydraulic shock absorber.

15. Double-tube cylinder according to Claim 13 or 14, **characterized in that** the guide ring (31) of the cylinder seal (2) is seated on the axially shortened inner tube (3) of the double-tube cylinder (1) and is held in position, and possibly clamped, by a cover (6) of the double-tube cylinder (1), in particular by a beaded edge portion of the outer tube (5).

## Revendications

1. Joint d'étanchéité de cylindre pour un cylindre (1) à double tube avec une tige de piston (10) apte à être rentrée et sortie dans la direction axiale (9), le joint (2) d'étanchéité de cylindre présentant un anneau d'étanchéité (12) ayant un anneau d'appui (14) et un moyen d'étanchéité (21), l'anneau d'appui (14) présentant, en section transversale, une forme coudée, avec une portion annulaire (15) en forme de disque et une portion annulaire (16) en forme de tube, la portion annulaire (16) en forme de tube étant agencée sur l'ouverture annulaire intérieure (17) de la portion annulaire (15) en forme de disque et s'étendant le long de la tige de piston (10) en position de montage, le moyen d'étanchéité (21) présentant un élément d'étanchéité (22) côté intérieur, en forme d'anneau, réalisé sous forme formant lèvre d'étanchéité flexible, qui est prévu et réalisé pour l'appui étanche sur l'enveloppe de la tige de piston (10) et qui est agencé sur le côté intérieur de la portion annulaire (16) en forme de tube, l'élément d'étanchéité (22) côté intérieur présentant sur sa périphérie intérieure plusieurs saillies radiales (27, 28, 29), le joint (2) d'étanchéité de cylindre étant conçu pour une large plage d'utilisation thermique d'environ -40°C à environ +180°C, l'anneau d'appui coudé (14) étant rigide et autoportant et réalisé en métal, en particulier en acier,
- le diamètre intérieur de la portion annulaire tubulaire (16) et l'élément d'étanchéité (22) côté intérieur étant adaptés au diamètre extérieur de la tige de piston (10) de telle sorte qu'en position de montage, l'élément d'étanchéité (22) côté intérieur est serré entre la tige de piston (10) et la portion annulaire tubulaire (16), **caractérisé en ce qu'**une saillie (29) est agencée sur une partie formant lèvre (26) dépassant dans la direction axiale (9) au-delà de l'extrémité libre de la portion annulaire tubulaire (16), à une distance axiale de cette extrémité libre.

2. Joint d'étanchéité de cylindre selon la revendication 1, **caractérisé en ce que** la portion annulaire tubulaire (16) présente un corps annulaire (38) fermé ou segmenté dans la direction circonférentielle.

3. Joint d'étanchéité de cylindre selon l'une des revendications précédentes, **caractérisé en ce que** le moyen d'étanchéité (21) est agencé de préférence de manière fixe sur l'anneau d'appui (14), notamment par vulcanisation, et présente plusieurs éléments d'étanchéité (22, 23, 24), de préférence reliés entre eux.

4. Joint d'étanchéité de cylindre selon l'une des revendications précédentes, **caractérisé en ce que** l'élément d'étanchéité (22) côté intérieur, réalisé à paroi pleine et massive, est soutenu sur sa périphérie extérieure, et optionnellement dans la direction axiale (9), par la portion annulaire tubulaire (16), la portion annulaire tubulaire (16) étant fixée et encastrée en appui sur la périphérie extérieure de l'élément d'étanchéité (22) côté intérieur.

5. Joint d'étanchéité de cylindre selon l'une des revendications précédentes, **caractérisé en ce que** l'élément d'étanchéité (22) côté intérieur présente au moins une, de préférence plusieurs, en particulier deux, parties formant lèvre (25, 26) qui, dans la direction axiale (9), dépassent des deux côtés de l'anneau d'appui (14), en particulier de la portion annulaire tubulaire (16) .

6. Joint d'étanchéité de cylindre selon la revendication 5, **caractérisé en ce que** la partie formant lèvre respective (25, 26) est réalisée sur la saillie axiale pour un appui étanche sur l'enveloppe de la tige de piston (10).

7. Joint d'étanchéité de cylindre selon la revendication 1, **caractérisé en ce que** l'anneau d'étanchéité (12) est conçu de telle sorte que l'effet de pression et les forces de pression de l'élément d'étanchéité (22) côté intérieur sur la tige de piston (10) sont exclusivement développés à partir de la portion annulaire (16) rigide de type tubulaire et de sa conception.

8. Joint d'étanchéité de cylindre selon l'une des revendications précédentes, **caractérisé en ce que** le moyen d'étanchéité (21) présente un élément d'étanchéité (23) côté extérieur, de préférence annulaire, sur le bord extérieur périphérique (19) de la portion annulaire (15) en forme de disque, qui est prévu et conçu pour s'appliquer de manière étanche contre le cylindre (1) ou contre une autre partie du joint (2) d'étanchéité de cylindre.

9. Joint de cylindre selon l'une des revendications précédentes, **caractérisé en ce que** le joint de cylindre (2) comporte un guide (13) de tige de piston ayant un anneau de guidage (31) qui présente une ouverture de passage (36) pour la tige de piston (10), un canal collecteur (32) de préférence annulaire et unique pour le liquide hydraulique et un ou plusieurs canaux de sortie (33) qui y sont raccordés et qui débouchent sur le côté extérieur de l'anneau de guidage (31).

10. Joint de cylindre selon la revendication 9, **caractérisé en ce que** les canaux de sortie (33) de l'anneau de guidage (31) sont conçus pour relier le canal collecteur (32) à un espace intermédiaire (5) entre un tube interne (3) et un tube externe (4) du cylindre (1) à double tube.

11. Joint d'étanchéité de cylindre selon l'une des revendications 9 ou 10, **caractérisé en ce que** l'anneau d'étanchéité (12) est agencé sur la face frontale du guide (13) de tige de piston et n'est soutenu axialement que sur le bord extérieur par un moyen de réception (34) en forme de base du guide (13) de tige de piston et est guidé radialement de l'extérieur sur sa périphérie extérieure, le canal collecteur (32) étant recouvert par l'anneau d'étanchéité (12) flottant au-dessus de lui, à distance axiale.

12. Joint d'étanchéité de cylindre selon l'une des revendications 9 à 11, **caractérisé en ce que** la partie formant lèvre en saillie (26) de l'élément d'étanchéité intérieur (22) est espacée axialement du canal collecteur (32) et de la paroi annulaire qui s'y trouve au niveau de l'ouverture de passage (36).

13. Cylindre à double tube comprenant un tube intérieur (3), un tube extérieur (4), une tige de piston (10) et un joint de cylindre (2) qui assure l'étanchéité du cylindre (1) et de la tige de piston (10) à l'extrémité du cylindre, **caractérisé en ce que** le joint de cylindre (2) est réalisé selon au moins l'une des revendications 1 à 12.

14. Cylindre à double tube selon la revendication 13, **caractérisé en ce que** le cylindre (1) à double tube est conçu sous la forme d'un amortisseur hydraulique.

15. Cylindre à double tube selon la revendication 13 ou 14, **caractérisé en ce que** l'anneau de guidage (31) du joint (2) d'étanchéité de cylindre repose sur le tube intérieur (3) raccourci axialement du cylindre (1) à double tube et est maintenu en position et est optionnellement serré par un couvercle (6) du cylindre (1) à double tube, en particulier par un bord rabattu du tube extérieur (5).
